# EUROPEAN PATENT SPECIFICATION

(11) **EP 2 404 055 B1**
(45) Date of publication and mention of the grant of the patent: **12.10.2016**
(21) Application number: 10706654.0
(22) Date of filing: 04.03.2010
(51) Int. Cl.: F03D 1/06

(54) **A WIND TURBINE PROVIDING INCREASED POWER OUTPUT**
EINE ERHÖHTE AUSGANGSLEISTUNG LIEFERNDE WINDTURBINE
EOLIENNE FOURNISSANT UNE PUISSANCE DE SORTIE ACCRUE

(30) Priority: 06.03.2009 DK 200900300; 06.03.2009 US 158048 P
(43) Date of publication of application: 11.01.2012
(73) Proprietor: Vestas Wind Systems A/S, 8200 Aarhus N (DK)
(72) Inventor: ROMBLAD, Jonas, DK-8240 Risskov (DK); GODSK, Kristian Balschmidt, DK-2200 Copenhagen N (DK)
(74) Representative: Vestas Patents Department
(86) International application number: PCT/EP2010/052772
(87) International publication number: WO 2010/100237

(56) References cited:
- EP-A1- 1 524 431
- EP-A1- 1 944 505
- EP-A2- 2 194 267
- WO-A1-2007/045244
- WO-A1-2007/071249
- CA-A1- 2 642 840
- DE-A1- 3 045 695
- JP-A- 2 032 000
- US-A- 3 578 264
- US-A- 5 058 837
- US-A- 5 253 828

## Description

### TECHNICAL FIELD

The invention relates to a wind turbine comprising a rotor with at least one blade.

### BACKGROUND

There is a general desire for wind turbine rotors to produce as much energy as possible for a given wind speed. However, the inner part of a wind turbine rotor blade has to meet requirements related to structure, manufacturing and transport, which requirements counteract optimal lift requirements. The structural requirements lead to the airfoil section being increasingly thicker towards a root section of the blade.

### SUMMARY

The object of the invention is to increase the power output from a wind turbine.

This object is reached with a wind turbine according to claim 1. Herein a flap is provided so as to at least partly extend along at least a part of a threshold thickness section of the blade in which the airfoil thickness is at least 36%, the flap being arranged so that a slot is provided between the threshold thickness section and the flap, the chord of the flap being at least 15% of the chord of the threshold thickness section.

Such a threshold thickness section would normally be provided in the inner part of the blade, in which the airfoil thickness is larger that at sections closer to the blade tip. The flap could be provided so as to extend at least partly along at least a part of a trailing edge of the threshold thickness section, the flap being arranged so that the slot is provided between the trailing edge and the flap. As seen in a lateral cross-section of the blade, the flap could be arranged entirely downstream of the threshold thickness section or partly or entirely overlapping the threshold thickness section.

A flap at a trailing edge of a main wing portion, arranged so that a slot is provided between the main wing portion and the flap, is often referred to as a slotted flap. Slotted flaps are known from aircraft applications, and have also been suggested for wind turbine blades, as in the patent documents WO92/01865, DE2908761 or DE4132453. Such traditional use of slotted flaps take advantage of the fact that the slot provides an airflow from the pressure to the suction side of the wing or blade, thereby preventing flow separation on the suction side, thereby increasing the maximum lift coefficient.

Similarly, DE3045695 discloses a wind turbine blade with a specific type of airplane flap - the 'Fowler-Flügel'. The blade comprises an auxiliary wing mounted behind the main wing and at an angle of approximately 45 degrees.

Here the airfoil thickness is defined as a ratio between the absolute thickness and the airfoil chord length. The inventors have found that at airfoils with a thickness of 36% and at thicker airfoils, at low angle of attacks, especially around zero degrees, a flow separation takes place on the pressure side of the airfoil. In addition, the inventors have found that a flap arranged downstream or partly downstream of the airfoil with a slot between the airfoil and the flap, wherein the chord of the flap being at least 15% of the chord of the threshold thickness section, will prevent such flow separation on the pressure side of the airfoil. Thereby, there will be a significant increase in lift of the blade. (The flap and threshold thickness section chords relate to their respective chords in a common cross-section perpendicular a longitudinal direction of the blade.)

The flap can either be incorporated in the initial design of the blade or added to an existing blade to increase the maximum lift. In addition to the flap preventing flow separation on the pressure side, the slot allows air from the pressure side to flow up through the slot and delay separation on the suction side of the section. The delayed separation allows higher maximum lift to be achieved. In the case of adding a flap to an existing blade there is also an increase in area/chord which contributes to the increase of lift. By providing the flap according to the invention, the blade root can be designed to better comply with the requirements of structure, manufacturing and transport. For example, a lower twist, a smaller chord and a higher thickness to chord ratio compared to a traditional root can be accomplished while not compromising lift performance.

Preferably, where the airfoil thickness of the threshold thickness section is between 36% and 45%, the chord of the flap is not more than 60% of the chord of the threshold thickness section. Preferably, where the airfoil thickness of the threshold thickness section is between 45% and 65%, the chord of the flap is 20%-100% of the chord of the threshold thickness section. Preferably, where the airfoil thickness of the threshold thickness section is between 65% and 85%, the chord of the flap is 25%-150% of the chord of the threshold thickness section.

Preferably, the thickness of the flap is between 10% and 25% in relation to its chord. Preferably, the camber of the flap is between 0% and 25%.

Preferably, where the airfoil thickness of the threshold thickness section is between 36% and 45%, the flap leading edge is located on an extension of, the threshold thickness section chord line, or at a distance from the threshold thickness section chord line such that an imaginary line which is parallel to the threshold thickness section chord line and intersects the flap leading edge is at a distance from the threshold thickness section chord line towards the pressure side of the threshold thickness section, which is no larger than 30%, preferably no larger than 10%, of the threshold thickness section chord.

According to the invention, where the airfoil thickness of the threshold thickness section is between 45% and 85%, the flap leading edge is located on an extension of the threshold thickness section chord line, or at a distance from the threshold thickness section chord line such that an imaginary line which is parallel to the threshold thickness section chord line and intersects the flap leading edge is at a distance from the threshold thickness section chord line towards the pressure side of the threshold thickness section, which is no larger than 50%, preferably no larger than 10%, of the threshold thickness section chord.

Additionally, where the airfoil thickness of the threshold thickness section is between 45% and 85%, the flap leading edge is located at a second distance from an imaginary line which is perpendicular to the threshold thickness section chord line and intersects an intersection between the threshold thickness section chord line and the threshold thickness section trailing edge, which distance is not larger than 30%, preferably no larger than 10%, of the threshold thickness section chord.

Additionally, where the airfoil thickness of the threshold thickness section is between 45% and 85%, the flap chord line is parallel to the threshold thickness section chord line, or the flap is angled towards the pressure side of the threshold thickness section so that the angle between the flap chord line and the threshold thickness section chord line no larger than 45 degrees, preferably no larger than 25 degrees.

Preferably, where the airfoil thickness of the threshold thickness section is between 36% and 45%, the flap leading edge is located a distance from an imaginary line which is perpendicular to the threshold thickness section chord line and intersects an intersection between the threshold thickness section chord line and the threshold thickness section trailing edge, which distance is not larger than 20%, preferably no larger than 10%, of the threshold thickness section chord. It should be noted that in some embodiments the distance between the flap leading edge and the threshold thickness section leading edge could be shorter that the distance between the leading and trailing edges of the threshold thickness section, e.g. if the flap leading edge is locate on the same side of the threshold thickness section chord line as the pressure side of the threshold thickness section.

Preferably, where the airfoil thickness of the threshold thickness section is between 36% and 45%, the flap chord line is parallel to the threshold thickness section chord line, the flap is angled towards the pressure side of the threshold thickness section so that the angle between the flap chord line and the threshold thickness section chord line no larger than 45 degrees, preferably no larger than 25 degrees.

Preferably, vortex generating means, which could be in the form of a plurality of vortex generators, are provided on the suction side of the flap. Preferably, the extension of the vortex generating means normal to the surface of the suction side of the flap is between 0.25% and 1% of the flap chord. Preferably, the vortex generating means are located at distances from the flap leading edge corresponding to 20%-40% of the flap chord. This will improve the flow attachment at the flap, which will further improve the lift of the blade(s).

Preferably, the flap extends along at least 50% of the threshold thickness section.

Preferably, the threshold thickness section presents a camber between 0% and 20% of the threshold thickness section chord.

Preferably, where the airfoil thickness of the threshold thickness section is between 36% and 45%, the trailing edge thickness of the threshold thickness section is not more than 15% of the threshold thickness section chord, where the airfoil thickness of the threshold thickness section is between 45% and 65%, the trailing edge thickness of the threshold thickness section is not more than 30% of the threshold thickness section chord, and where the airfoil thickness of the threshold thickness section is between 65% and 85%, the trailing edge thickness of the threshold thickness section is not more than 45% of the threshold thickness section chord.

The threshold thickness section can optionally present vortex generating means, which could be in the form of a plurality of vortex generators, provided on the suction side of the threshold thickness section. The extension of the vortex generating means normal to the surface of the suction side of the threshold thickness section can, where the airfoil thickness of the threshold thickness section is between 36% and 65%, be between 0.5% and 2% of the threshold thickness section chord, and where the airfoil thickness of the threshold thickness section is between 65% and 85%, be between 1% and 3% of the threshold thickness section chord. The vortex generating means can, where the airfoil thickness of the threshold thickness section is between 36% and 65%, be located at distances from the threshold thickness section leading edge corresponding to 10%-20% of the threshold thickness section chord. The vortex generating means can, where the airfoil thickness of the threshold thickness section is between 65% and 85%, be located at distances from the threshold thickness section leading edge corresponding to 5%-15% of the threshold thickness section chord.

Further embodiments of the invention include the flap being arranged to be detached from the blade for transport.

### DESCRPTION OF THE FIGURES

Below, embodiments of the invention will be described with reference to the drawings, in which
- fig. 1 is a schematic plan view of a wind turbine blade with a flap according to one embodiment of the invention,
- fig. 2 is a schematic cross-section oriented as indicated by the line II-II in fig. 1,
- fig. 3 shows a detail of fig. 2,
- fig. 4 shows a view similar to the one shown in fig. 4 in an alternative embodiment of the invention,
- fig. 5 - fig. 7 show respective views of a vortex generator provided on the blade or on the flap, in fig. 1 - fig. 4, and
- fig. 8 - fig. 15 show results of CFD simulations of a main airfoil, with and without a slotted flap.

### DETAILED DESCRIPTION

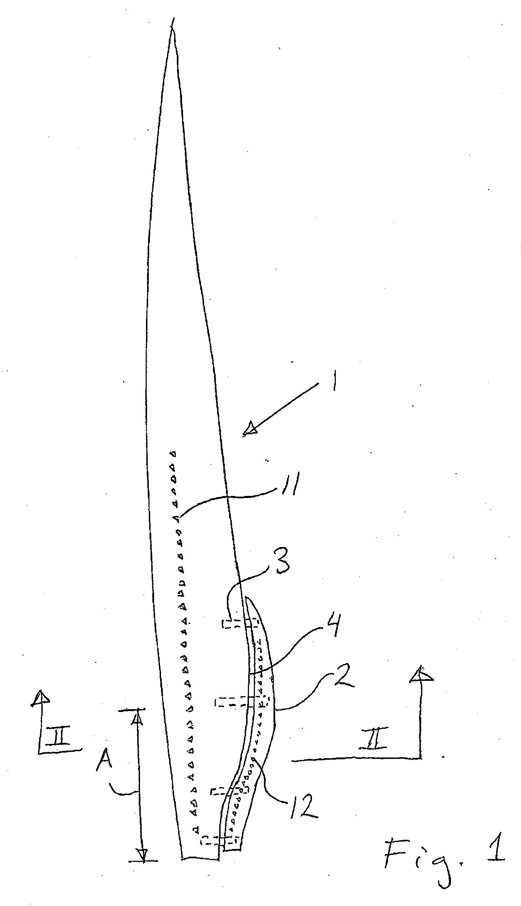

Fig. 1 is a schematic plan view of a wind turbine blade 1. The airfoil of the blade thickens towards the root, and within a section indicated by a double arrow A, the airfoil thickness is 36% or more, and this section is herein referred to as a threshold thickness section. A flap 2 is arranged to extend downstream the blade 1, and is fixed to the blade with a suitable arrangement 3 schematically indicated in fig. 1. A part of the flap 2 extends downstream of a part of the threshold thickness section A. Another part of the flap 2 extends downstream of a section of the blade 1 being further from the blade root compared to the threshold thickness section A. The flap is arranged so that a slot is provided between the blade 1 and the flap 2.

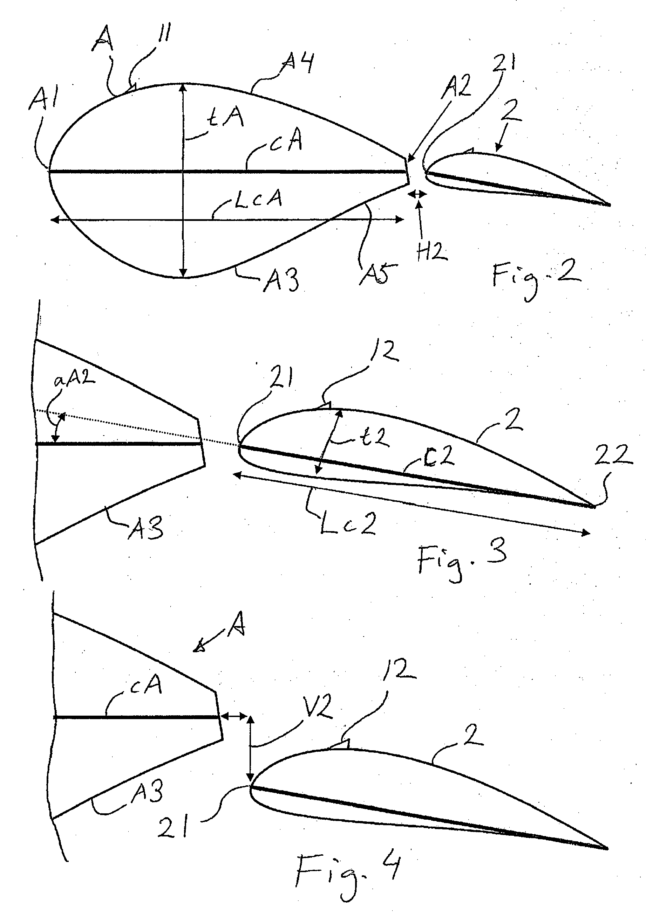

Referring to fig. 2, the chord line cA of the threshold thickness section A extends from its leading edge A1 to the middle of its trailing edge A2, which in this example forms a straight line in the cross-section. The threshold thickness section thickness is defined as the absolute thickness tA divided by the threshold thickness section chord line length LcA, herein also referred to simply as the threshold thickness section chord. The threshold thickness section presents a pressure side A3 and a suction side A4.

The flap 2 is located in relation to the threshold thickness section A so that the flap leading edge 21 is located on an extension of the threshold thickness section chord line cA, and downstream of the threshold thickness section trailing edge, i.e. at a distance H2 from an imaginary line which is perpendicular to the threshold thickness section chord line cA and intersects an intersection between the threshold thickness section chord line cA and the threshold thickness section trailing edge A2.

Fig. 3 indicates by a double arrow t2 the absolute thickness of the flap 2, and the flap chord with a double arrow Lc2, i.e. the length of the flap chord line c2 extending from the flap leading edge 21 to the flap trailing edge 22. The flap thickness is defined as the absolute thickness t2 divided by the flap chord Lc2.

The flap is angled towards the pressure side A3 of the threshold thickness section A so that an angle aA2 between the flap chord line c2 and the threshold thickness section chord line cA is formed.

As can be seen in fig. 2, the threshold thickness section A presents a concave curvature A5 of the pressure side A3 extending from the trailing edge A2. In general, preferable, such a concave curvature A5 extends from the trailing edge A2, and its extension is 5-15%, preferably about 10%, of the threshold thickness section chord LcA.

Fig. 4 shows an alternative embodiment differing from the embodiment shown in fig. 2 and fig. 3 in that the flap leading edge 21 is located at a distance from the threshold thickness section chord line cA such that an imaginary line which is parallel to the threshold thickness section chord line cA and intersects the flap leading edge 21 is at a distance V2 from the threshold thickness section chord line cA, towards the pressure side A3 of the threshold thickness section A.

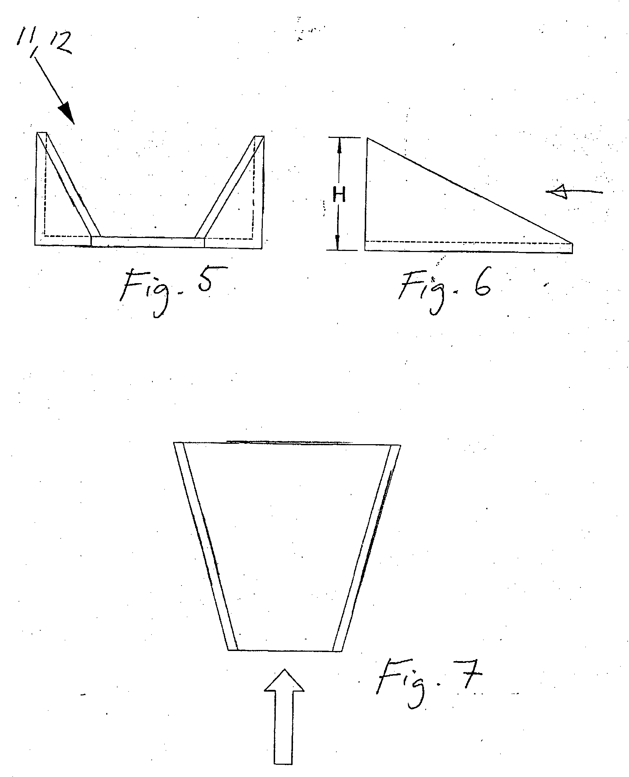

As can be seen in fig. 1 - fig. 4, vortex generating means 11, 12 in the form of vortex generators are provided on the blade 1 as well as on the flap 2. The vortex generators are distributed in the spanwise direction. Each vortex generator 11, 12 could be provided as illustrated in fig. 5 - fig. 7, described in the international application PCT/DK2005/000324. Fig. 5 shows a vortex generator as seen from an upwind position, fig. 6 shows it in a side view, and fig. 7 shows it in a top view, the flow direction being indicated with arrows. The extension of the flap vortex generators 12 normal to the surface of the suction side of the flap is indicated with a double arrow H in fig. 6.

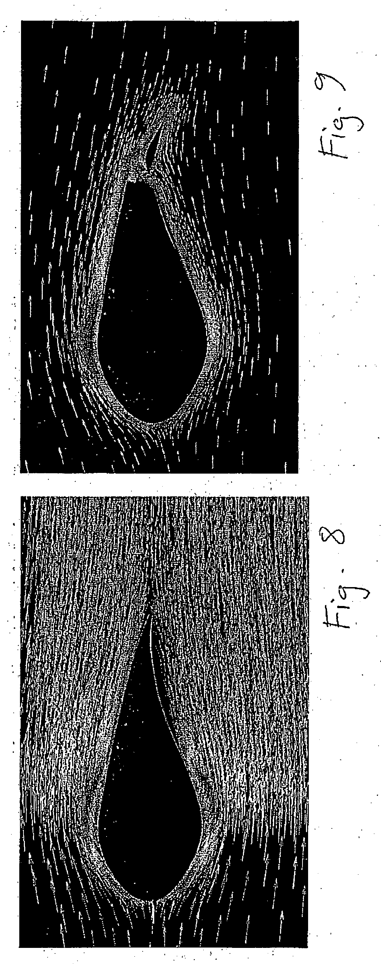

Fig. 8 and fig. 9 illustrate an important advantage of the invention. Fig. 8 and fig. 9 show results of CFD (Computational Fluid Dynamics) simulations of a main airfoil at an angle of attack of zero degrees, with and without a slotted flap with a chord being 25% of the main airfoil chord. The main airfoil has a thickness of 36%, and the inventors have found that a flow separation takes place on the pressure side of the airfoil, as can be seen in fig. 8. Such a separation does not take place at thinner airfoils at this angle of attack. The inventors have also found that a slotted can remove or reduce this pressure side separation, as can be seen in fig. 9. This is reflected in the dramatic difference of the lift coefficient (cl), i.e. the lift coefficient is 0.2 in the simulation in fig. 8 and 1.2 in the simulation in fig. 9.

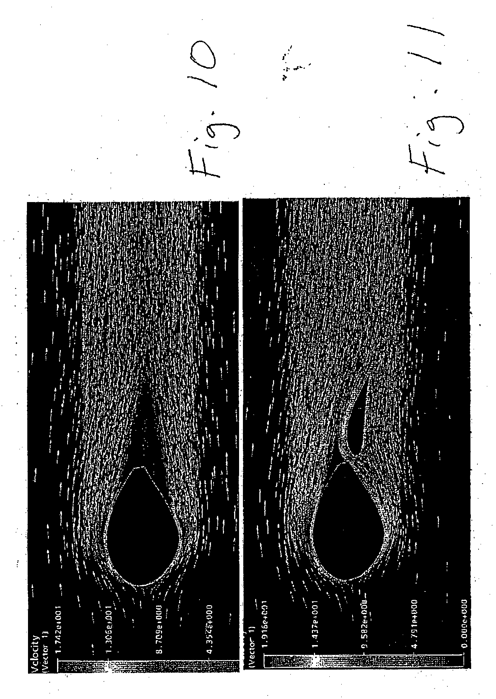

Fig. 10 and fig. 11 illustrate results of CFD simulations of a main airfoil at an angle of attack of zero degrees, with and without a slotted flap with a chord being 67% of the main airfoil chord. The flap in fig. 11 is angled downward 10 degrees in relation to the main airfoil chord line, and also located below the main airfoil chord line. The main airfoil has a thickness of 62%, and without the flap a pronounced flow separation can be observed on the pressure side. As can be seen in fig. 11, this separation is completely avoided in the presence of the flap. This is reflected in the dramatic increase of the lift coefficient for the main airfoil alone from 0.35 in fig. 10 to 1.1 in fig. 11.

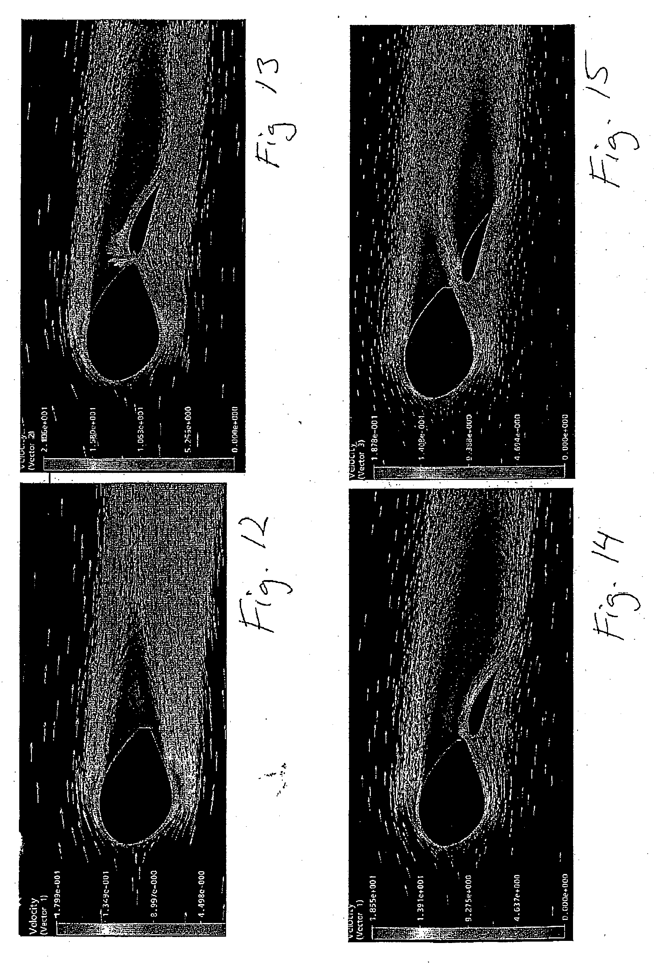

Fig. 12 - fig. 15 illustrate results of CFD simulations of the main airfoil in fig. 10 and fig. 11 at an angle of attack of 10 degrees. In fig. 13 - fig. 15, the flap is angled downward 10 degrees in relation to the main airfoil chord line. In fig. 13 the leading edge of the flap is located on the extension of the main airfoil chord line, while in fig. 14 and fig. 15, the flap is located at respective distances below the main airfoil chord line, said distance in fig. 15 being larger than said distance in fig. 14. As can be seen, the main airfoil pressure side flow separation is avoided in the presence of the flap. In the simulation in fig. 12 the lift coefficient is -0.2, in fig. 13, 14 and 15 the lift coefficient of the main airfoil alone is 1.0, 1.1 and 0.9, respectively.

## Claims

1. A wind turbine comprising a rotor with at least one blade, wherein a flap (2) is arranged to at least partly extend along at least a part of a threshold thickness section (A) of the blade in which the airfoil thickness, which is defined as the ratio between the absolute thickness and the airfoil chord length, is at least 36%, the flap being fixed to the blade and arranged so that a slot is provided between the threshold thickness section and the flap, the chord of the flap being at least 15% of the chord of the threshold thickness section, wherein, where the airfoil thickness of the threshold thickness section is between 45% and 85%;
- the flap leading edge is located on an extension of the threshold thickness section chord line, or at a distance from the threshold thickness section chord line such that a first imaginary line which is parallel to the threshold thickness section chord line and intersects the flap leading edge is at a first distance from the threshold thickness section chord line, towards the pressure side of the threshold thickness section, which first distance is no larger than 50%, preferably no larger than 10%, of the threshold thickness section chord,
- the flap leading edge is located at a second distance from a second imaginary line which is perpendicular to the threshold thickness section chord line and intersects an intersection between the threshold thickness section chord line and the threshold thickness section trailing edge, which second distance is not larger than 30%, preferably no larger than 10%, of the threshold thickness section chord, and
- the flap chord line is parallel to the threshold thickness section chord line, or the flap is angled towards the pressure side of the threshold thickness section so that the angle between the flap chord line and the threshold thickness section chord line is no larger than 25 degrees.

2. A wind turbine according to claim 1, wherein, where the airfoil thickness of the threshold thickness section is between 36% and 45%, the chord of the flap is not more than 60% of the chord of the threshold thickness section.

3. A wind turbine according to any one of the preceding claims, wherein, where the airfoil thickness of the threshold thickness section is between 45% and 65%, the chord of the flap is 20%-100% of the chord of the threshold thickness section.

4. A wind turbine according to any one of the preceding claims, wherein, where the airfoil thickness of the threshold thickness section is between 65% and 85%, the chord of the flap is 25%-150% of the chord of the threshold thickness section.

5. A wind turbine according to any one of the preceding claims, wherein the thickness of the flap is between 10% and 25% in relation to its chord.

6. A wind turbine according to any one of the preceding claims, wherein the camber of the flap is between 0% and 25%.

7. A wind turbine according to any one of the preceding claims, wherein, where the airfoil thickness of the threshold thickness section is between 36% and 45%, the flap leading edge is located on an extension of the threshold thickness section chord line, or at a distance from the threshold thickness section chord line such that an imaginary line which is parallel to the threshold thickness section chord line and intersects the flap leading edge is at a distance from the threshold thickness section chord line towards the pressure side of the threshold thickness section, which is no larger than 30%, preferably no larger than 10%, of the threshold thickness section chord.

8. A wind turbine according to any one of the preceding claims, wherein, where the airfoil thickness of the threshold thickness section is between 36% and 45%, the flap leading edge is located a distance from an imaginary line which is perpendicular to the threshold thickness section chord line and intersects an intersection between the threshold thickness section chord line and the threshold thickness section trailing edge, which distance is not larger than 20%, preferably no larger than 10%, of the threshold thickness section chord.

9. A wind turbine according to any one of the preceding claims, wherein, where the airfoil thickness of the threshold thickness section is between 36% and 45%, the flap chord line is parallel to the threshold thickness section chord line, or the flap is angled towards the pressure side of the threshold thickness section so that the angle between the flap chord line and the threshold thickness section chord line no larger than 45 degrees, preferably no larger than 25 degrees.

10. A wind turbine according to any one of the preceding claims, wherein vortex generating means are provided on the suction side of the flap.

11. A wind turbine according to claim 10, wherein the extension (H) of the vortex generating means normal to the surface of the suction side of the flap is between 0.25% and 1% of the flap chord.

12. A wind turbine according to any one of claims 10-11, wherein the vortex generating means are located at distances from the flap leading edge corresponding to 20%-40% of the flap chord.

## Patentansprüche

1. Windturbine umfassend einen Rotor mit zumindest einem Blatt, wobei eine Klappe (2) angeordnet ist, um sich zumindest teilweise entlang eines Schwellendickenabschnitts (A) des Blattes zu erstrecken, in dem die Profildicke, die als das Verhältnis zwischen der absoluten Dicke und der Profilsehnenlänge definiert ist, zumindest 36% ist, wobei die Klappe an dem Blatt befestigt und angeordnet ist, sodass ein Spalt zwischen dem Schwellendickenabschnitt und der Klappe bereitgestellt wird, wobei die Sehne der Klappe zumindest 15% der Sehne des Schwellendickenabschnitts beträgt, wobei, wo die Profildicke des Schwellendickenabschnitts zwischen 45% und 85% beträgt;
- die Anströmkante der Klappe an einer Verlängerung der Schwellendickenabschnittssehnenlinie angeordnet ist oder von der Schwellendickenabschnittssehnenlinie beabstandet ist, sodass eine erste imaginäre Linie, die parallel zu der Schwellendickenabschnittssehnenlinie ist und die Anströmkante der Klappe schneidet, sich in einem ersten Abstand von der Schwellendickenabschnittssehnenlinie befindet, in Richtung der Druckseite des Schwellendickenabschnitts, wobei der erste Abstand nicht größer als 50%, vorzugsweise nicht größer als 10%, der Schwellendickenabschnittssehne ist,
- die Anströmkante der Klappe in einem zweiten Abstand von einer zweiten imaginären Linie angeordnet ist, die senkrecht zu der Schwellendickenabschnittssehnenlinie ist und einen Schnittpunkt zwischen der Schwellendickenabschnittssehnenlinie und der Abströmkante des Schwellendickenabschnitts schneidet, wobei der zweite Abstand nicht größer als 30%, vorzugsweise nicht größer als 10%, der Schwellendickenabschnittssehne ist, und
- die Klappensehnenlinie parallel zu der Schwellendickenabschnittssehnenlinie ist, oder die Klappe zu der Druckseite des Schwellendickenabschnitts hin geneigt ist, sodass der Winkel zwischen der Klappensehnenlinie und der Schwellendickenabschnittssehnenlinie nicht größer als 25 Grad ist.

2. Windturbine nach Anspruch 1, wobei die Profildicke des Schwellendickenabschnitts zwischen 36% und 45% liegt, die Sehne der Klappe nicht mehr als 60% der Sehne des Schwellendickenabschnitts beträgt.

3. Windturbine nach einem der vorhergehenden Ansprüche, wobei, wo die Profildicke des Schwellendickenabschnitts zwischen 45% und 65% beträgt, die Sehne der Klappe 20%-100% der Sehne des Schwellendickenabschnitts beträgt.

4. Windturbine nach einem der vorhergehenden Ansprüche, wobei, wo die Profildicke des Schwellendickenabschnitts zwischen 65% und 85% beträgt, die Sehne der Klappe 25%-150% der Sehne des Schwellendickenabschnitts beträgt.

5. Windturbine nach einem der vorhergehenden Ansprüche, wobei die Dicke der Klappe zwischen 10% und 25% in Bezug auf ihrer Sehne beträgt.

6. Windturbine nach einem der vorhergehenden Ansprüche, wobei die Wölbung der Klappe zwischen 0% und 25% beträgt.

7. Windturbine nach einem der vorhergehenden Ansprüche, wobei, wo die Profildicke des Schwellendickenabschnitts zwischen 36% und 45% beträgt, die Anströmkante der Klappe an einer Verlängerung der Schwellendickenabschnittssehnenlinie angeordnet ist, oder von der Schwellendickenabschnittssehnenlinie beabstandet ist, sodass eine imaginäre Linie, die parallel zu der Schwellendickenabschnittssehnenlinie ist und die Anströmkante der Klappe schneidet, sich in einem Abstand von der Schwellendickenabschnittssehnenlinie in Richtung der Druckseite des Schwellendickenabschnitts befindet, welcher nicht größer als 30%, vorzugsweise nicht größer als 10%, der Schwellendickenabschnittssehne ist.

8. Windturbine nach einem der vorhergehenden Ansprüche, wobei, wo die Profildicke des Schwellendickenabschnitts zwischen 36% und 45% beträgt, die Anströmkante der Klappe in einem Abstand von einer imaginären Linie angeordnet ist, die senkrecht zu der Schwellendickenabschnittssehnenlinie ist und einen Schnittpunkt zwischen der Schwellendickenabschnittssehnenlinie und der Abströmkante des Schwellendickenabschnitts schneidet, wobei der Abstand nicht größer als 20%, vorzugsweise nicht größer als 10%, der Schwellendickenabschnittssehne ist.

9. Windturbine nach einem der vorhergehenden Ansprüche, wobei, wo die Profildicke des Schwellendickenabschnitts zwischen 36% und 45% beträgt, die Klappensehnenlinie parallel zu der Schwellendickenabschnittssehnenlinie ist, oder die Klappe zu der Druckseite des Schwellendickenabschnitts hin geneigt ist, sodass der Winkel zwischen der Klappensehnenlinie und der Schwellendickenabschnittssehnenlinie nicht größer als 45 Grad, vorzugsweise nicht größer als 25 Grad, ist.

10. Windturbine nach einem der vorhergehenden Ansprüche, wobei Wirbel erzeugende Mittel an der Ansaugseite der Klappe vorgesehen sind.

11. Windturbine nach Anspruch 10, wobei die Verlängerung (H) der Wirbel erzeugenden Mittel normal zu der Oberfläche der Ansaugseite der Klappe zwischen 0,25% und 1% der Klappensehne ist.

12. Windturbine nach einem der Ansprüche 10-11, wobei die Wirbel erzeugende Mittel in Abständen von der Anströmkante der Klappe angeordnet sind, die 20%-40% der Klappensehne entsprechen.

## Revendications

1. Eolienne comprenant un rotor avec au moins une pale, dans laquelle un volet (2) est agencé pour s'étendre au moins en partie le long d'au moins une partie d'une section d'épaisseur seuil (A) de la pale dans laquelle l'épaisseur de surface portante, qui est définie comme le rapport entre l'épaisseur absolue et la longueur en corde de surface portante, est d'au moins 36 %, le volet étant fixé à la pale et agencé de sorte qu'une fente soit fournie entre la section d'épaisseur seuil et le volet, la corde du volet étant d'au moins 15 % de la corde de la section d'épaisseur seuil, dans laquelle, là où l'épaisseur de surface portante de la section d'épaisseur seuil est entre 45 % et 85 % ;
- le bord d'attaque de volet est situé sur une extension de la ligne en corde de section d'épaisseur seuil, ou à une distance de la ligne en corde de section d'épaisseur seuil de sorte qu'une première ligne imaginaire qui est parallèle à la ligne en corde de section d'épaisseur seuil et croise le bord d'attaque de volet soit à une première distance de la ligne en corde de section d'épaisseur seuil, vers le côté de pression de la section d'épaisseur seuil, laquelle première distance n'est pas supérieure à 50 %, de préférence pas supérieure à 10 %, de la corde de section d'épaisseur seuil,
- le bord d'attaque de volet est situé à une seconde distance d'une seconde ligne imaginaire qui est perpendiculaire à la ligne en corde de section d'épaisseur seuil et croise une intersection entre la ligne en corde de section d'épaisseur seuil et le bord de fuite de section d'épaisseur seuil, laquelle seconde distance n'est pas supérieure à 30 %, de préférence pas supérieure à 10 %, de la corde de section d'épaisseur seuil, et
- la ligne en corde de volet est parallèle à la ligne en corde de section d'épaisseur seuil, ou le volet est anglé vers le côté de pression de la section d'épaisseur seuil de sorte que l'angle entre la ligne en corde de volet et la ligne en corde de section d'épaisseur seuil ne soit pas supérieur à 25 degrés.

2. Eolienne selon la revendication 1, dans laquelle, là où l'épaisseur de surface portante de la section d'épaisseur seuil est entre 36 % et 45 %, la corde du volet n'est pas supérieure à 60 % de la corde de la section d'épaisseur seuil.

3. Eolienne selon l'une quelconque des revendications précédentes, dans laquelle, là où l'épaisseur de surface portante de la section d'épaisseur seuil est entre 45 % et 65 %, la corde du volet est de 20 % à 100 % de la corde de la section d'épaisseur seuil.

4. Eolienne selon l'une quelconque des revendications précédentes, dans laquelle, là où l'épaisseur de surface portante de la section d'épaisseur seuil est entre 65 % et 85 % ; la corde du volet est de 25 % à 150 % de la corde de la section d'épaisseur seuil.

5. Eolienne selon l'une quelconque des revendications précédentes, dans laquelle l'épaisseur du volet est entre 10 % et 25 % par rapport à sa corde.

6. Eolienne selon l'une quelconque des revendications précédentes, dans laquelle la courbure du volet est entre 0 % et 25 %.

7. Eolienne selon l'une quelconque des revendications précédentes, dans laquelle, là où l'épaisseur de surface portante de la section d'épaisseur seuil est entre 36 % et 45 %, le bord d'attaque de volet est situé sur une extension de la ligne en corde de section d'épaisseur seuil ou à une distance de la ligne en corde de section d'épaisseur seuil de sorte qu'une ligne imaginaire qui est parallèle à la ligne en corde de section d'épaisseur seuil et croise le bord d'attaque de volet soit à une distance de la ligne en corde de section d'épaisseur seuil vers le côté pression de la section d'épaisseur seuil, qui n'est pas supérieure à 30 %, de préférence pas supérieure à 10 %, de la corde de section d'épaisseur seuil.

8. Eolienne selon l'une quelconque des revendications précédentes, dans laquelle, là où l'épaisseur de surface portante de la section d'épaisseur seuil est entre 36 % et 45 %, le bord d'attaque de volet est situé à une distance d'une ligne imaginaire qui est perpendiculaire à la ligne en corde de section d'épaisseur seuil et croise une intersection entre la ligne en corde de section d'épaisseur seuil et le bord de fuite de section d'épaisseur seuil, laquelle distance n'est pas supérieure à 20 %, de préférence pas supérieure à 10 %, de la corde de section d'épaisseur seuil.

9. Eolienne selon l'une quelconque des revendications précédentes, dans laquelle, là où l'épaisseur de surface portante de la section d'épaisseur seuil est entre 36 % et 45 %, la ligne en corde de volet est parallèle à la ligne en corde de section d'épaisseur seuil, ou le volet est anglé vers le côté de pression de la section d'épaisseur seuil de sorte que l'angle entre la ligne en corde de volet et la ligne en corde de section d'épaisseur seuil ne soit pas supérieur à 45 degrés, de préférence pas supérieur à 25 degrés.

10. Eolienne selon l'une quelconque des revendications précédentes, dans laquelle des moyens de génération de tourbillon sont fournis sur le côté d'aspiration du volet.

11. Eolienne selon la revendication 10, dans laquelle l'extension (H) des moyens de génération de tourbillon normale à la surface du côté d'aspiration du volet est entre 0,25 % et 1 % de la corde de volet.

12. Eolienne selon l'une quelconque des revendications 10 à 11, dans laquelle les moyens de génération de tourbillon sont situés à des distances du bord d'attaque de volet correspondant à 20 % à 40 % de la corde de volet.
